# EUROPÄISCHE PATENTSCHRIFT

(11) **EP 2 692 988 B1**
(45) Veröffentlichungstag und Bekanntmachung des Hinweises auf die Patenterteilung: **18.04.2018**
(21) Anmeldenummer: 13003789.8
(22) Anmeldetag: 30.07.2013
(51) Int. Cl.: F01D 5/16, F01D 5/26, F01D 5/28, F01D 25/06, F01D 5/14, F01D 5/30, F04D 29/32

(54) **Entkoppelte Verdichterschaufel einer Gasturbine**
Decoupled compressor blade of a gas turbine
Aube découplée de compresseur d'une turbine à gaz

(30) Priorität: 30.07.2012 DE 102012015136
(43) Veröffentlichungstag der Anmeldung: 05.02.2014
(73) Patentinhaber: Rolls-Royce Deutschland Ltd & Co KG, 15827 Blankenfelde-Mahlow (DE)
(72) Erfinder: Schreiber, Karl, 15838 Am Mellensee (DE)
(74) Vertreter: Hoefer & Partner Patentanwälte mbB

(56) Entgegenhaltungen:
- GB-A- 2 218 473
- US-A- 3 694 104
- US-A1- 2002 076 328

## Beschreibung

Die Erfindung bezieht sich auf eine Verdichterschaufel einer Fluggasturbine mit einem Schaufelblatt aus einem faserverstärkten Kunststoff. Die Erfindung ist jedoch auch bei einer stationären Gasturbine anwendbar.

Aus dem Stand der Technik ist es bekannt, Verdichterschaufeln für Fluggasturbinen, insbesondere für Fans, aus metallischen Werkstoffen zu gießen oder zu schmieden. Zunehmend werden jedoch auch Verdichterschaufeln eingesetzt, welche aus faserverstärkten Kunststoffen gefertigt sind, beispielsweise faserverstärkten Kohlefaserkunststoffen.

Bei derartigen faserverstärkten Kunststoffschaufelblättern von Verdichterschaufeln erweist sich der Erosionsschutz der Eintrittskante sowie der Schutz der Eintrittskante gegenüber mechanischen Belastungen und Beschädigungen als besonders kritisch. Derartige mechanische Belastungen können beispielsweise durch einen Vogelschlag oder durch eingesaugte Staubpartikel oder Steine hervorgerufen werden. Das Material des faserverstärkten Schaufelblattes ist für derartige Belastungen nicht optimiert, so dass der Stand der Technik Eintrittskantenelemente aus metallischen Werkstoffen, beispielsweise Titanlegierungen, zeigt, welche das Schaufelblatt vor Beschädigungen schützen sollen.

Fluggasturbinen sowie Verdichterschaufeln werden vielfach mit sehr komplexer Geometrie ausgebildet, beispielsweise stark verdrillt oder getwistet oder, bei Fans von Fluggasturbinen, in gesichelter Form. Hinsichtlich des metallischen Eintrittskantenelements ergeben sich somit hohe Anforderungen bezüglich der Lebensdauer, der Festigkeit, der Applitzierbarkeit sowie der Herstellkosten. Durch die sehr komplexe Geometrie der Verdichterschaufeln selbst ist es erforderlich, auch das Eintrittskantenelement entsprechend mit einer komplexen Geometrie auszubilden. Bedingt durch die Herstellbarkeit derartiger Eintrittskantenelemente können vielfach die Geometrien der Verdichterschaufeln nicht strömungstechnisch optimiert werden.

Die im Stand der Technik vorgesehene adhäsive Verbindung zwischen dem Eintrittskantenelement und dem Schaufelblatt erweist sich als zusätzlicher Schwachpunkt hinsichtlich der Lebensdauer und der Herstellbarkeit. Insbesondere werden die vergleichsweise sehr hohen G-Kräfte des schwereren Eintrittskantenelements über die adhäsive Verbindung in die Materialstruktur des aus faserverstärkten Kunststoff gefertigten Schaufelblattes eingeleitet und von dort in den Schaufelfuß geführt. Dabei wirken sich die unterschiedlichen physikalischen Eigenschaften des metallischen Eintrittskantenelements und des aus faserverstärkten Kunststoff gefertigten Schaufelblatts als nachteilig aus, insbesondere hinsichtlich des thermischen Ausdehnungskoeffizienten und der unterschiedlichen E-Module, sowie hinsichtlich der Anisotropie des aus faserverstärkten Kunststoff gefertigten Schaufelblatts. Bei dem Ausdehnungskoeffizienten ist insbesondere zu beachten, dass sich faserverstärkte Kunststoffe bei Erwärmung zusammenziehen, während metallische Werkstoffe sich bei Erwärmung ausdehnen.

GB 2 218 473 A offenbart ein Luftschaufelblatt, das mittels eines Schaufelfußes an einer Scheibe bzw. an einem Ring befestigt ist. Das Luftschaufelblatt besteht aus einem Schaufelprofil an dessen Vorderkante ein im Querschnitt U-förmiger Metallmantel mittels Nieten oder - im Blattspitzenbereich - geklebt an einem Kunststoffprofil befestigt ist.

US 2002/076328 A1 ist eine Rotorschaufel vorbekannt, die mittels eines Schaufelfußes an einer Scheibe montiert ist. Die Verdichterschaufel ist zweiteilig aus einem ersten Schaufelblattabschnitt und aus einem zweiten Schaufelblattabschnitt ausgebildet. Der erste Schaufelblattabschnitt ist aus einem metallischen Werkstoff hergestellt, währenddessen der zweite Schaufelblattabschnitt aus einem Leichtbaumaterial, vorzugsweise einem Kohlefaser-Verbundwerkstoff (CFK), gefertigt ist. Der erste Schaufelblattabschnitt und der zweite Schaufelblattabschnitt sind einschnittig/schäftig mittels einer Klebeverbindung miteinander verbunden. Der zweite Schaufelblattabschnitt ist nach Art einer Fahne auf dem ersten Schaufelabschnitt angeordnet und auf dem ersten Schaufelblattabschnitt angearbeitet. Der zweite Schaufelblattabschnitt weist somit, insbesondere im Hinterkanten- und Blattspitzenbereich, vorwiegend eine aerodynamische Funktion auf und ist somit in strukturell weniger belasteten Bereichen angeordnet, wodurch einerseits das Gesamtgewicht der Schaufel und andererseits die Schaufelfußbelastung reduziert werden.

Der Erfindung liegt die Aufgabe zugrunde, eine Verdichterschaufel einer Fluggasturbine, insbesondere einer Verdichterschaufel eines Fans einer Fluggasturbine, zu schaffen, welche bei einfachem Aufbau und einfacher, kostengünstiger Herstellbarkeit die Nachteile des Standes der Technik vermeidet und eine hohe Funktionalität sowie eine hohe Lebensdauer aufweist.

Erfindungsgemäß wird die Aufgabe durch die Merkmalskombination des Anspruches 1 gelöst, die Unteransprüche zeigen weitere vorteilhafte Ausgestaltungen der Erfindung.

Erfindungsgemäß ist somit vorgesehen, dass die Verdichterschaufel zweiteilig ausgebildet ist. Zum einen umfasst diese ein Schaufelblatt aus einem faserverstärkten Kunststoff, welches mittels eines Schaufelfußes an einer Scheibe des Verdichters oder des Fans befestigt ist. Zusätzlich hierzu ist erfindungsgemäß ein Eintrittskantenelement vorgesehen, welches ein selbstständiges Bauteil bildet und an der Eintrittskante des Schaufelblatts dieses teilweise umgreift. Erfindungsgemäß ist das Eintrittskantenelement selbst an der Scheibe befestigt und gelagert, das heißt entkoppelt aufgehängt.

Erfindungsgemäß werden somit die auftretenden Kräfte, insbesondere die Fliehkräfte, sowohl des Schaufelblatts als auch des Eintrittskantenelements jeweils separat in die Scheibe eingeleitet, so dass das aus dem faserverstärkten Kunststoff gefertigte Schaufelblatt nicht die zusätzlichen Kräfte und Lasten des Eintrittskantenelements aufnehmen muss. Es erfolgt somit eine konstruktive Entkoppelung der metallischen Komponente (Eintrittskantenelement) und der Komponente aus faserverstärktem Kunststoff (Schaufelblatt).

Erfindungsgemäß erstreckt sich das Eintrittskantenelement bis in den Fuß der Verdichterschaufel und ermöglicht somit eine direkte Verankerung an der Scheibe, unabhängig von der Struktur des Schaufelblattes aus faserverstärktem Kunststoff.

Erfindungsgemäß ist keine adhäsive Verbindung zwischen dem Eintrittskantenelement und dem Schaufelblatt vorgesehen. Derartige adhäsive Verbindungen erweisen sich stets als problematisch, da insbesondere die für derartige Eintrittskantenelemente verwendeten Legierungen, beispielsweise Titanlegierungen, nur bedingt verklebbar sind.

Das erfindungsgemäße Eintrittskantenelement ist im Querschnitt im Wesentlichen U-förmig aufgebaut und liegt mit seinen Schenkeln unter Vorspannung gegen die Oberfläche des Schaufelblatts an. Hierbei ist eine Relativbewegung möglich. Diese Relativbewegung führt zu einer Schwingungsdämpfung bei Verformungen der Verdichterschaufel, so dass diese eine höhere Stabilität aufweist. Die Gefahr eines Versagens der Verdichterschaufel wird somit erheblich reduziert. Dabei ist insbesondere zu beachten, dass im Versagensfall nie gleichzeitig sowohl das Eintrittskantenelement als auch das Schaufelblatt brechen werden, so dass bei einem Versagen von nur einem der beiden Komponenten die andere noch funktionsfähig verbleibt.

Bedingt durch die bessere Dämpfung wird vermieden, dass sich im Eintrittskantenelement Risse ausbilden, so wie dies beim Stand der Technik auftreten kann. Die Schaufeln werden aerodynamisch zu Schwingungen angeregt, welche zu den Hauptschädigungsmechanismen der Schaufeln gehören. Diese Schwingungen werden durch diese entkoppelte Bauweise wirksam reduziert.

Um die Korrosionsbeständigkeit des Schaufelblattes zu verbessern, kann es vorteilhaft sein, im Kontaktbereich zwischen dem Eintrittskantenelement und dem Schaufelblatt einen direkten Kontakt zwischen den beiden Materialien zu vermeiden. Um eine elektrische Isolierung zu realisieren, kann es günstig sein, im Kontaktbereich eine Lage aus glasfaserverstärktem Kunststoff auf das aus einem kohlenfaserverstärkten Kunststoff gefertigte Schaufelblatt aufzubringen.

Erfindungsgemäß ergibt sich somit eine hohe Dämpfung der Verdichterschaufel selbst, da auf eine Verklebung zwischen dem Eintrittskantenelement und dem Schaufelblatt verzichtet werden kann. Durch den Verzicht auf eine Verklebung vereinfachen sich auch die Herstellungsschritte. Weiterhin ist es möglich, das Eintrittskantenelement mit einer sehr komplexen Geometrie auszubilden, welche bei den aus dem Stand der Technik bekannten Lösungen nicht möglich ist, da dort das Eintrittskantenelement auf das Schaufelblatt aufgebracht und mit diesem verbunden (verklebt) werden muss.

Die erfindungsgemäß realisierte gute Dämpfung, welche durch eine Reibung zwischen dem Eintrittskantenelement und dem Schaufelblatt erfolgt, führt auch zu dem Vorteil, dass die beiden Komponenten (Eintrittskantenelement und Schaufelblatt) ihre eigene Eigenfrequenz beibehalten können. Hierdurch wird ein Flattern der Verdichterschaufel vermieden, da die unterschiedlichen Eigenfrequenzen eine Relativbewegung der beiden Komponenten verursachen.

In besonders günstiger Ausgestaltung der Erfindung ist vorgesehen, dass das Eintrittskantenelement aus einem ersten und einem zweiten Teilelement aufgebaut ist, welche miteinander verbunden sind, beispielsweise mittels eines Laserschweißverfahrens oder mittels eines formschlüssigen Verbindungsverfahrens, beispielsweise mittels Bolzen, Schrauben oder ähnlichem. Hierdurch wird die Möglichkeit eröffnet, die beiden Teilelemente mit sehr komplexer Geometrie zu erzeugen, beispielsweise durch Schmieden oder Umformen. Auch hierdurch ergibt sich eine wesentliche Reduzierung der Herstellkosten sowie der Montagekosten. Erfindungsgemäß ist es möglich, die beiden Teilelemente des Eintrittskantenelements auf das Schaufelblatt aufzulegen und geeignet vorzuspannen, bevor die Verbindung der beiden Teilelemente durch Schweißen oder mittels mechanischer Elemente erfolgt. Bei einem Verbinden mittels eines Schweißverfahrens, beispielsweise eines Laserschweißverfahrens, ergibt sich der Vorteil, dass der Wärmeeintrag in das Material des Schaufelblattes sehr gering gehalten werden kann, so dass dieses durch den Fügeprozess nicht negativ beeinflusst wird.

Da erfindungsgemäß die beiden Schenkel des im Querschnitt im Wesentlichen U-förmigen Eintrittskantenelements unter Vorspannung gegen die Oberfläche des Schaufelblattes anliegen und diese umgreifen, ist es möglich, die Teilelemente des Eintrittskantenelements mit großer oder größerer Toleranz zu fertigen, da Fertigungstoleranzen durch die Vorspannung kompensiert werden.

Erfindungsgemäß kann es günstig sein, im Fügebereich des ersten Teilelements und des zweiten Teilelements ein Anströmkantenelement aus einem erosionsbeständigen Material anzuordnen beispielsweise aus Manganhartstahl oder aus Stellite und damit eine selbstschärfende Bauweise der Vorderkante zu erreichen.

Da die erfindungsgemäße Ausgestaltung dazu führt, dass das Schaufelblatt keine zusätzlichen Kräfte durch das Eintrittskantenelement aufnehmen muss, ist es möglich, das Schaufelblatt selbst schlanker und aerodynamisch optimaler auszugestalten. Insgesamt ergibt sich ein geringeres Gewicht der erfindungsgemäßen Verdichterschaufel. Dies ist insbesondere bei Fanschaufeln von besonderem Vorteil. Durch die erhöhte spezifische Belastbarkeit ist auch eine Anwendung in kleineren Triebwerken zum Beispiel 20.000lbs Startschub denkbar.

Ein weiterer, wesentlicher Vorteil ergibt sich bei einer erfindungsgemäßen Ausgestaltung einer Fanschaufel dadurch, dass die Konstruktion ein geringeres Versagensrisiko aufweist. Wie erläutert, kann es im Wesentlichen ausgeschlossen werden, dass sowohl das Schaufelblatt als auch das Eintrittskantenelement gleichzeitig versagen. Möglicherweise tritt hierdurch gar kein Fanblade-off-Versagensfall auf. Hierdurch ist es möglich, ein wesentlich leichteres und geringer dimensioniertes Fancontainment vorzusehen, da wesentlich geringere Aufprallenergien aufgenommen werden müssen. Ein weiterer Vorteil des entkoppelten Konzeptes ist, dass kein gleichzeitiges Versagen der metallischen und Faserverstärkten Komponente zu erwarten ist, wodurch die kinetische Energie im Versagensfall weiter reduziert wird.

In günstiger Ausgestaltung der Erfindung ist es möglich, zwischen das Eintrittskantenelement und das Schaufelblatt Reibelemente anzuordnen, welche die Dämpfung verstärken. Diese Reibelemente können in Form von Reibstreifen ausgebildet sein. Weiterhin ist es möglich, Dämpfungselemente einzubringen, welche insbesondere im einströmseitigen Bereich bei einem Aufschlag des Fremdkörpers die Dämpfung erhöhen und somit das Schaufelblatt schützen.

Zusätzlich ist es möglich, axiale formschlüssige Sicherungen vorzusehen, um das Eintrittskantenelement mit dem Schaufelblatt zu koppeln.

Erfindungsgemäß ist somit vorgesehen, dass das metallische Eintrittskantenelement und das faserverstärkte Schaufelblatt zur jeweils unabhängigen, voneinander entkoppelten Einleitung von G-Kräften in die Scheibe ausgebildet sind.

Im Folgenden wird die Erfindung anhand von Ausführungsbeispielen in Verbindung mit der Zeichnung beschrieben. Dabei zeigt:
- Fig. 1: zeigt eine schematische Darstellung eines Gasturbinentriebwerks gemäß der vorliegenden Erfindung.
- Fig. 2: eine Teil-Schnittansicht eines Ausführungsbeispiels einer erfindungsgemäßen Verdichterschaufel,
- Fig. 3 und 4: vereinfachte Seitenansichten auf die Druckseite und die Saugseite einer erfindungsgemäßen Verdichterschaufel,
- Fig. 5: eine Schnittansicht, analog Fig. 2, eines weiteren Ausführungsbeispiels,
- Fig. 6: eine weitere Schnittansicht, analog den Fig. 2 und 5, eines weiteren Ausführungsbeispiels der Erfindung, und
- Fig. 7: eine schematische Darstellung des Schaufelfußes und der Scheibe.

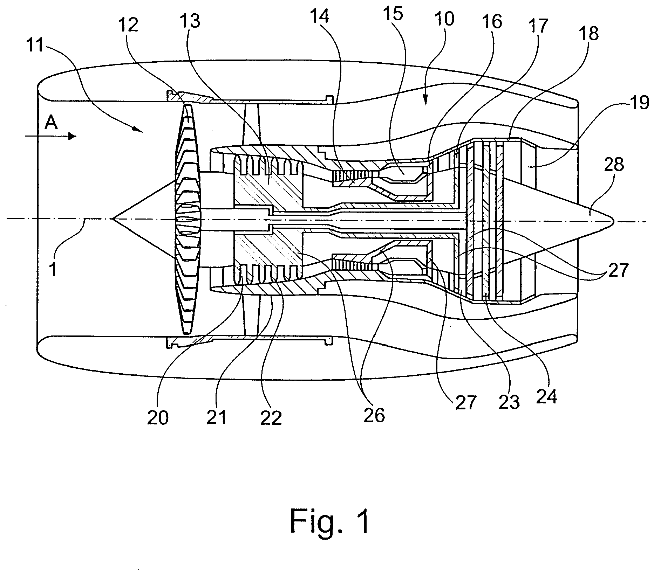

Das Gasturbinentriebwerk 10 gemäß Fig. 1 ist ein allgemein dargestelltes Beispiel einer Turbomaschine, bei der die Erfindung Anwendung finden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Mitteldruckkompressor 13, einen Hochdruckkompressor 14, eine Brennkammer 15, eine Hochdruckturbine 16, eine Mitteldruckturbine 17 und eine Niederdruckturbine 18 sowie eine Abgasdüse 19, die sämtlich um eine zentrale Triebwerksachse 1 angeordnet sind.

Der Zwischendruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Triebwerksgehäuse 21 in einem ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Mitteldruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenlaufschaufeln 24 drehen sich im Betrieb um die Triebwerksachse 1.

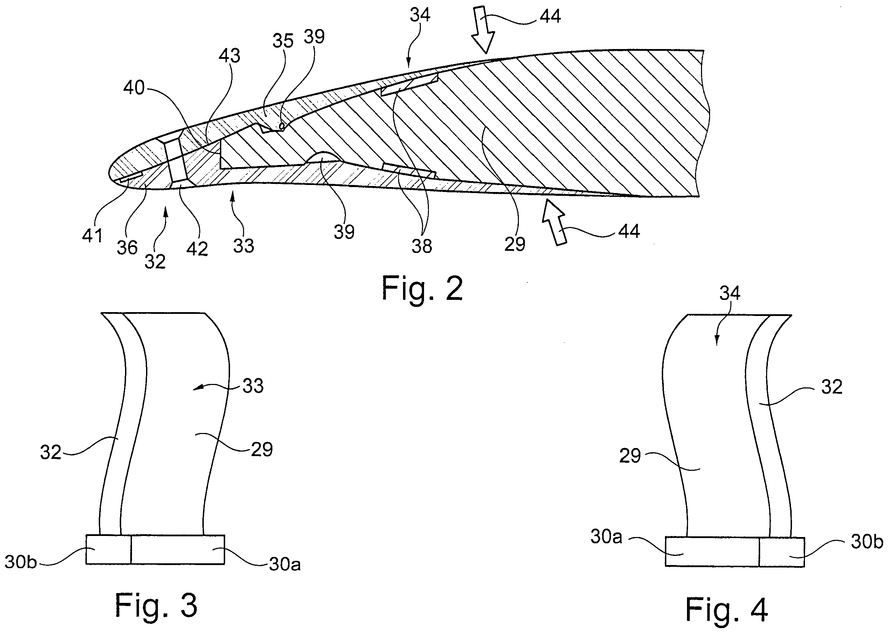

Die Fig. 2 zeigt eine Teil-Schnittansicht eines erfindungsgemäßen Schaufelblatts 29, welches aus einem faserverstärkten Werkstoff, beispielsweise einem kohlenstofffaserverstärkten Werkstoff gefertigt ist. An der Einströmseite des Schaufelblatts 29 ist ein Eintrittskantenelement 32 angeordnet, welches im Querschnitt im Wesentlichen U-förmig ausgebildet ist und aus einem ersten Teilelement 35 und einem zweiten Teilelement 36 aufgebaut ist. Diese sind bei dem gezeigten Ausführungsbeispiel mittels Bolzen oder Nieten 37 verbunden. Im Bereich der Anströmkante ist im Bereich einer Trennlinie 43 zwischen dem ersten Teilelement 35 und dem zweiten Teilelement 36 ein Anströmkantenelement 41 angeordnet.

Die Pfeile 44 zeigen eine Vorspannkraft, mit welcher die beiden Endbereiche der Teilelemente 35 und 36 gegen die Oberfläche des Schaufelblatts 29 anliegen.

Zwischen dem Schaufelblatt 29 und den Teilelementen 35 und 36 sind jeweils Reibelemente 38 angeordnet, welche beispielsweise in Form von Reibstreifen ausgebildet sein können. Am einströmseitigen Eckbereich des Schaufelblatts ist ein Dämpfungselement 40 dargestellt, welches zur Dämpfung einer Stoßbelastung dient.

Durch das Bezugszeichen 33 ist die Druckseite der Verdichterschaufel bezeichnet, während das Bezugszeichen 34 die Saugseite zeigt.

Weiterhin zeigt die Figur 2 in schematischer Weise formschlüssige Sicherungen 39, welche eine zusätzliche axiale Sicherung bewirken.

Die Fig. 3 und 4 zeigen jeweils eine schematische Seitenansicht der erfindungsgemäßen Verdichterschaufel auf die Druckseite (Fig. 3) sowie auf die Saugseite (Fig. 4). Hierbei ist insbesondere dargestellt, dass das Schaufelblatt 29 mit einem Schaufelfuß 30 verbunden ist und dass das Eintrittskantenelement 32 ebenfalls mit einem Schaufelfuß 30 verbunden ist. An der Druckseite (Fig. 3) erstreckt sich das Eintrittskantenelement 32 in den Schaufelfuß 30 bzw. geht in diesen über, während an der Saugseite das Eintrittskantenelement 32 vor dem Schaufelfuß 30 enden kann.

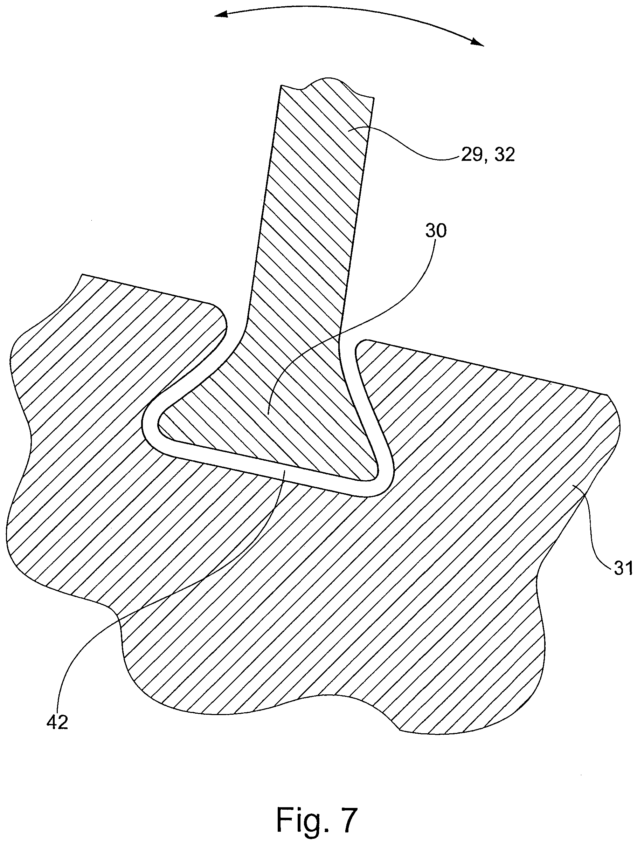

Die Fig. 7 zeigt eine schematische Darstellung einer Scheibe 31 mit einer Ausnehmung 42, in welcher der Schaufelfuß 30 verankert ist. Der Doppelpfeil zeigt, dass eine Relativbewegung oder Schwingung zwischen dem Schaufelblatt 29 bzw. dem Eintrittskantenelement 32 und der Scheibe 31 auftreten kann. Diese Relativbewegung führt ebenfalls zu einer Dämpfung.

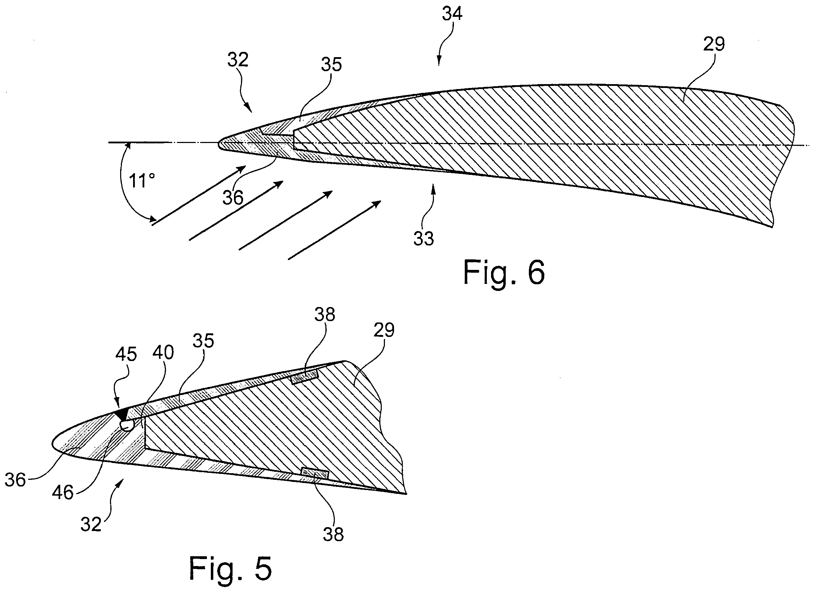

Die Fig. 5 zeigt ein Ausführungsbeispiel, bei welchem die Teilelemente 35 und 36 mittels einer Schweißnaht 45 verbunden sind. Zusätzlich ist ein Freiraum 46 vorgesehen, um eine Durchschweißung zu gewährleisten.

Die Fig. 6 zeigt in verdeutlichter Darstellung die Anströmung der erfindungsgemäßen Verdichterschaufel, welche bevorzugt in einem Winkel von 11° zur Mittelachse erfolgt.

Aus den Darstellungen, insbesondere der Fig. 2 und 6, ergibt sich, dass die axiale Längserstreckung des Eintrittskantenelements auf der Druckseite länger ist, wobei dort eine größere Materialdicke vorgesehen ist, als auf der Saugseite. Hierdurch wird eine Verankerung des Eintrittskantenelements an dem Schaufelfuß 30 an der Druckseite verbessert, so wie dies in Fig. 3 dargestellt ist.

Die Verbindung des Eintrittskantenelements 32 mit dem Schaufelblatt 29 erfolgt bevorzugt erst nach der Applizierung auf dem Schaufelblatt 29.

Das Eintrittskantenelement kann beispielsweise aus einer Titanlegierung, beispielsweise Ti 6/4 gefertigt sein.

### Bezugszeichenliste:

- 1: Triebwerksachse
- 10: Gasturbinentriebwerk / Kerntriebwerk
- 11: Lufteinlass
- 12: Fan
- 13: Mitteldruckkompressor (Verdichter)
- 14: Hochdruckkompressor
- 15: Brennkammer
- 16: Hochdruckturbine
- 17: Mitteldruckturbine
- 18: Niederdruckturbine
- 19: Abgasdüse
- 20: Leitschaufeln
- 21: Triebwerksgehäuse
- 22: Kompressorlaufschaufeln
- 23: Leitschaufeln
- 24: Turbinenschaufeln
- 26: Kompressortrommel oder -scheibe
- 27: Turbinenrotornabe
- 28: Auslasskonus
- 29: Schaufelblatt
- 30: Schaufelfuß
- 31: Scheibe
- 32: Eintrittskantenelement
- 33: Druckseite
- 34: Saugseite
- 35: erstes Teilelement
- 36: zweites Teilelement
- 37: Verbindungselement / Bolzen / Niete
- 38: Reibelement
- 39: formschlüssige Sicherung
- 40: Dämpfungselement
- 41: Anströmelement
- 42: Ausnehmung
- 43: Trennlinie
- 44: Vorspannkraft
- 45: Schweißnaht
- 46: Freiraum

## Patentansprüche

1. Verdichterschaufel einer Gasturbine mit einem Schaufelblatt (29) aus einem faserverstärkten Kunststoff, welches mittels eines Schaufelfußes (30) an einer Scheibe (31) befestigt ist, sowie mit einem metallischen Eintrittskantenelement (32), welches an der Eintrittsseite des Schaufelblatts (29) angeordnet ist und dieses an einer druckseitigen (33) und einer saugseitigen (34) Oberfläche teilweise umgreift, **dadurch gekennzeichnet, dass** das Eintrittskantenelement (32) und das Schaufelblatt (29) separat an der Scheibe (31) befestigt sind.

2. Verdichterschaufel nach Anspruch 1, **dadurch gekennzeichnet, dass** das Eintrittskantenelement unter Vorspannung gegen die druckseitige (33) und die saugseitige (34) Oberfläche des Schaufelblatts (29) anliegt.

3. Verdichterschaufel nach Anspruch 2,**dadurch gekennzeichnet, dass** das Eintrittskantenelement (32) unter Ermöglichung einer Relativbewegung in Schaufelachse gegen das Schaufelblatt (29) anliegt.

4. Verdichterschaufel nach einem der Ansprüche 1 bis 3, **dadurch gekennzeichnet, dass** das Eintrittskantenelement (32) ein erstes Teilelement (35) und ein zweites Teilelement (36) umfasst, welches miteinander verbunden sind.

5. Verdichterschaufel nach Anspruch 4, **dadurch gekennzeichnet, dass** die Teilelemente (35, 36) mittels eines Laserschweißverfahrens oder mittels formschlüssiger Verbindungselemente (37) miteinander verbunden sind.

6. Verdichterschaufel nach einem der Ansprüche 1 bis 5, **dadurch gekennzeichnet, dass** zwischen dem Eintrittskantenelement (32) und dem Schaufelblatt (29) zumindest ein Reibelement (38) angeordnet ist.

7. Verdichterschaufel nach einem der Ansprüche 1 bis 6, **dadurch gekennzeichnet, dass** das Eintrittskantenelement (32) formschlüssig mit dem Schaufelblatt (29) verbunden ist.

8. Verdichterschaufel nach einem der Ansprüche 1 bis 7, **dadurch gekennzeichnet, dass** an dem einströmseitigen Bereich zwischen dem Schaufelblatt (29) und dem Eintrittskantenelement (32) zumindest ein Dämpfungselement (40) angeordnet ist.

9. Verdichterschaufel nach einem der Ansprüche 1 bis 8, **dadurch gekennzeichnet, dass** zwischen den Teilelementen (35, 36) einströmseitig ein Anströmkantenelement (41) angeordnet ist.

10. Verdichterschaufel nach einem der Ansprüche 1 bis 9, **dadurch gekennzeichnet, dass** das metallische Eintrittskantenelement (32) und das faserverstärkte Schaufelblatt (29) zur jeweils unabhängigen, voneinander entkoppelten Einleitung von Kräften in die Scheibe (31) ausgebildet sind.

11. Verdichterschaufel nach einem der Ansprüche 1 bis 10, **dadurch gekennzeichnet, dass** die Verbindung des Eintrittskantenelements (32) mit dem Schaufelblatt (29) erst nach der Applizierung auf dem Schaufelblatt (29) erfolgt.

12. Verdichterschaufel nach einem der Ansprüche 1 bis 11, **dadurch gekennzeichnet, dass** diese eine Fanschaufel eines Fans einer Fluggasturbine ist.

## Claims

1. Compressor blade of a gas turbine having an airfoil (29) made of a fiber-reinforced plastic, which is fastened by means of a blade root (30) to a disk (31), as well as a metallic leading-edge element (32), which is arranged on the leading-edge side of the airfoil (29) and partially encompasses the latter on a pressure-side (33) and a suction-side (34) surface, **characterized in that** the leading-edge element (32) and the airfoil (29) are separately fastened to the disk (31).

2. Compressor blade in accordance with Claim 1, **characterized in that** the leading-edge element contacts the pressure-side (33) and the suction-side (34) surface of the airfoil (29) under preload.

3. Compressor blade in accordance with Claim 2, **characterized in that** the leading-edge element (32) contacts the airfoil (29) in the blade axis, enabling a relative movement.

4. Compressor blade in accordance with one of the Claims 1 to 3, **characterized in that** the leading-edge element (32) includes a first partial element (35) and a second partial element (36) which are connected to one another.

5. Compressor blade in accordance with Claim 4, **characterized in that** the partial elements (35, 36) are connected to one another by means of a laser welding method or by means of positive connecting elements (37).

6. Compressor blade in accordance with one of the Claims 1 to 5, **characterized in that** between the leading-edge element (32) and the airfoil (29) at least one friction element (38) is arranged.

7. Compressor blade in accordance with one of the Claims 1 to 6, **characterized in that** the leading-edge element (32) is positively connected to the airfoil (29).

8. Compressor blade in accordance with one of the Claims 1 to 7, **characterized in that** at least one dampening element (40) is arranged in the inflow-side area between the airfoil (29) and the leading-edge element (32).

9. Compressor blade in accordance with one of the Claims 1 to 8, **characterized in that** an inflow-edge element (41) is arranged on the inflow side between the partial elements (35, 36).

10. Compressor blade in accordance with one of the Claims 1 to 9, **characterized in that** the metallic leading-edge element (32) and the fiber-reinforced airfoil (29) are designed for respectively independent introduction of forces, decoupled from one another, into the disk (31).

11. Compressor blade in accordance with one of the Claims 1 to 10, **characterized in that** the leading-edge element (32) is connected to the airfoil (29) only after application on the airfoil (29).

12. Compressor blade in accordance with one of the Claims 1 to 11, **characterized in that** the latter is a fan blade of a fan of an aircraft gas turbine.

## Revendications

1. Aube de compresseur d'une turbine à gaz avec une pale (29) en plastique renforcé par des fibres qui est fixée à un disque (31) au moyen d'un pied d'aube (30), et avec un élément de bord d'attaque métallique (32) qui est disposé sur le côté d'attaque de la pale (29) et enveloppe ce dernier partiellement sur une surface côté pression (33) et une surface côté aspiration (34), **caractérisée en ce que** l'élément de bord d'attaque (32) et la pale (29) sont fixés séparément sur le disque (31).

2. Aube de compresseur selon la revendication n° 1, **caractérisée en ce que** l'élément de bord d'attaque repose sous précontrainte contre la surface côté pression (33) et la surface côté aspiration (34) de la pale (29).

3. Aube de compresseur selon la revendication n° 2, **caractérisée en ce que** l'élément de bord d'attaque (32) repose contre la pale (29) dans l'axe de l'aube, permettant un mouvement relatif.

4. Aube de compresseur selon une des revendications n° 1 à n° 3, **caractérisée en ce que** l'élément de bord d'attaque (32) comprend un premier élément partiel (35) et un second élément partiel (36) qui sont reliés ensemble.

5. Aube de compresseur selon la revendication n° 4, **caractérisée en ce que** les éléments partiels (35, 36) sont reliés ensemble au moyen d'un procédé de soudure au laser ou au moyen d'éléments de liaison (37) à complémentarité de forme.

6. Aube de compresseur selon une des revendications n° 1 à n° 5, **caractérisée en ce qu'**au moins un élément de friction (38) est disposé entre l'élément de bord d'attaque (32) et la pale (29).

7. Aube de compresseur selon une des revendications n° 1 à n° 6, **caractérisée en ce que** l'élément de bord d'attaque (32) est relié par complémentarité de forme à la pale (29).

8. Aube de compresseur selon une des revendications n° 1 à n° 7, **caractérisée en ce qu'**au moins un élément d'amortissement (40) est disposé dans la zone côté entrée du flux entre la pale (29) et l'élément de bord d'attaque (32).

9. Aube de compresseur selon une des revendications n° 1 à n° 8, **caractérisée en ce qu'**un élément de bord d'entrée de flux (41) est disposé côté entrée du flux entre les éléments partiels (35, 36).

10. Aube de compresseur selon une des revendications n° 1 à n° 9, **caractérisée en ce que** l'élément de bord d'attaque métallique (32) et la pale renforcée par des fibres (29) sont conçus pour une introduction respectivement indépendante et découplée des forces dans le disque (31).

11. Aube de compresseur selon une des revendications n° 1 à n° 10, **caractérisée en ce que** la liaison de l'élément de bord d'attaque (32) à la pale (29) n'a lieu qu'après l'application sur à la pale (29).

12. Aube de compresseur selon une des revendications n° 1 à n° 11, **caractérisée en ce que** l'aube est une aube d'une soufflante d'une turbine à gaz aéronautique.
